# EUROPEAN PATENT APPLICATION

(11) **EP 3 933 970 A1**
(43) Date of publication of application: **05.01.2022**
(21) Application number: 21164465.3
(22) Date of filing: 24.03.2021
(51) Int. Cl.: H01M 4/13, H01M 4/32, H01M 4/62, H01M 10/30, H01M 10/34

(54) **POSITIVE ELECTRODE FOR ALKALINE SECONDARY BATTERY, AND ALKALINE SECONDARY BATTERY**

(30) Priority: 26.03.2020 JP 2020055688
(71) Applicant: FDK Corporation, Tokyo 108-8212 (JP)
(72) Inventor: Tanimoto, Yuya, Tokyo, 108-8212 (JP); Ishida, Jun, Tokyo, 108-8212 (JP); Yamane, Tetsuya, Tokyo, 108-8212 (JP); Imoto, Yuzo, Tokyo, 108-8212 (JP)
(74) Representative: Epping - Hermann - Fischer

(57) **Abstract**

A battery (2) includes an outer can (10), and an electrode group (22) that is accommodated in the outer can (10) together with an alkaline electrolyte solution, in which the electrode group (22) includes a positive electrode (24) and a negative electrode (26) superposed with a separator (28) being interposed therebetween, the positive electrode (24) includes a positive electrode core and a positive electrode mixture packed in the positive electrode core, the positive electrode mixture includes a nickel hydroxide powder that is an aggregate of a particle of nickel hydroxide as a positive electrode active material, and a conductive material, the conductive material is a high-valent cobalt compound provided with a high valence and having a valence of higher than three, the high-valent cobalt compound containing sodium, and the conductive material is in an amount of 0.5 parts by mass or more and 5.0 parts by mass or less based on 100 parts by mass of the positive electrode active material.

## Description

### BACKGROUND OF THE INVENTION

### Field of the Invention

The present invention relates to a positive electrode for an alkaline secondary battery, and an alkaline secondary battery.

### Description of the Related Art

Non-sintered nickel positive electrodes are generally used as positive electrodes for alkaline secondary batteries. Such a non-sintered nickel positive electrode is produced by packing a paste of a positive electrode active material mixture including fine particles of nickel hydroxide (Ni(OH)₂) as a positive electrode active material, in foam nickel (positive electrode core) having a three-dimensional network structure, and drying and then press-molding the paste (for example, Japanese Patent Laid-Open No. S60-131765). The non-sintered nickel positive electrode, in which a large amount of nickel hydroxide can be packed in the positive electrode core, thus is large in charge/discharge capacity per unit volume and contributes to an increase in battery capacity, as compared with a sintered nickel positive electrode conventionally used.

Positive electrode active materials in positive electrodes of alkaline secondary batteries are nickel hydroxide in discharge. Nickel hydroxide is oxidized and converted into nickel oxyhydroxide (NiOOH) according to progression of charge. After the completion of charge and the start of discharge, nickel oxyhydroxide is reduced and changed to nickel hydroxide (Ni(OH)₂) according to progression of discharge.

Nickel hydroxide by itself is low in conductivity, and thus any conductive network between positive electrode active material particles and any conductive network between positive electrode active material particles and positive electrode cores are partially broken according to progression of discharge, resulting in a reduction in rate of utilization of positive electrode active materials. Thus, conductive materials are added to positive electrode mixtures for the purposes of enhancing the rate of utilization of positive electrode active materials and of imparting a high conductivity. For example, cobalt hydroxide is generally used as such a conductive material (for example, Japanese Patent Laid-Open No. H01-315962).

Such an alkaline secondary battery as described above, although it exhibits a high capacity, easily causes self-discharge to occur. The term self-discharge means a phenomenon where, although such a battery is not actually discharged while being connected to any load, the same chemical reaction as in discharge occurs in such a battery and the remaining capacity of such a battery is gradually decreased. The self-discharge is, for example, mainly self-decomposition of a positive electrode. Examples thereof include a self-decomposition reaction that occurs in a positive electrode according to the following formula I, resulting in reduction of nickel oxyhydroxide.

NiOOH + OH⁻→ Ni(OH)₂ + 1/2O₂ ... (I)

A battery that easily causes self-discharge to occur is non-user-friendly because the battery, if charged and thereafter left to still stand for a long period, is remarkably decreased in the remaining capacity of the battery and is required to be again charged before use.

Thus, as the application of an alkaline secondary battery is expanded, there is a demand for the development of an alkaline secondary battery that is less in self-discharge and is more user-friendly.

In particular, an alkaline secondary battery, to which cobalt hydroxide is added as a conductive material, tends to cause self-discharge to occur. In other words, while cobalt hydroxide is added for an enhancement in rate of utilization of a positive electrode active material, a failure is caused which corresponds to deterioration in characteristics of self-discharge. Thus, there is a demand for the development of a battery that is high in rate of utilization of a positive electrode active material and is less in self-discharge.

### SUMMARY OF THE INVENTION

The object of the present invention is to provide a positive electrode for an alkaline secondary battery, and an alkaline secondary battery, which can achieve both an enhancement in rate of utilization of the positive electrode active material and suppression of self-discharge.

In order to achieve the above object, the present invention provides a positive electrode for an alkaline secondary battery, including a positive electrode core and a positive electrode mixture packed in the positive electrode core, wherein the positive electrode mixture includes a nickel hydroxide powder that is an aggregate of a particle of nickel hydroxide as a positive electrode active material, and a conductive material, the conductive material is a high-valent cobalt compound provided with a high valence and having a valence of more than three, the high-valent cobalt compound containing sodium, and the conductive material is in an amount of 0.5 parts by mass or more and 5.0 parts by mass or less based on 100 parts by mass of the positive electrode active material.

The particle of nickel hydroxide is preferably configured to have a conductive layer formed by the sodium-containing high-valent cobalt compound, on a surface thereof.

The present invention also provides an alkaline secondary battery including a container, and an electrode group that is accommodated in the container together with an alkaline electrolyte solution, wherein the electrode group includes a positive electrode and a negative electrode superposed with a separator being interposed therebetween, and the positive electrode is the above positive electrode for an alkaline secondary battery.

The negative electrode is preferably configured to include a hydrogen storage alloy.

The positive electrode for an alkaline secondary battery of the present invention is a positive electrode for an alkaline secondary battery, including a positive electrode core and a positive electrode mixture packed in the positive electrode core, wherein the positive electrode mixture includes a nickel hydroxide powder that is an aggregate of a particle of nickel hydroxide as a positive electrode active material, and a conductive material, the conductive material is a high-valent cobalt compound provided with a high valence and having a valence of more than three, the high-valent cobalt compound containing sodium, and the conductive material is in an amount of 0.5 parts by mass or more and 5.0 parts by mass or less based on 100 parts by mass of the positive electrode active material. Such a configuration not only can allow high conductivity to be exhibited, but also can suppress self-discharge at a low level. Thus, the present invention can provide a positive electrode for an alkaline secondary battery, and an alkaline secondary battery, which can achieve both an enhancement in rate of utilization of the positive electrode active material and suppression of self-discharge.

### BRIEF DESCRIPTION OF THE DRAWINGS

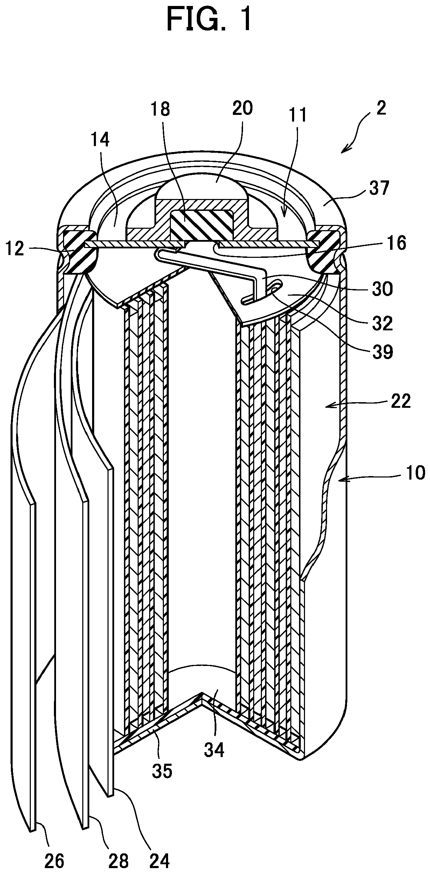

FIG. 1 is a perspective view illustrated by partially fracturing a nickel-hydrogen secondary battery according to one embodiment.

### DETAILED DESCRIPTION OF THE PREFERRED EMBODIMENTS

Hereinafter, a nickel-hydrogen secondary battery (hereinafter, referred to as "battery") 2 according to one embodiment will be described with reference to the drawing.

The battery 2 is, for example, an AA-sized cylindrical battery. Particularly, the battery 2 includes an outer can 10 as a container having a bottomed cylindrical shape with an opened upper end, as illustrated in Fig. 1. The outer can 10 has conductivity, and a bottom wall 35 thereof serves as a negative electrode terminal. The outer can 10 has an opening to which a sealing member 11 is secured. The sealing member 11 includes a lid plate 14 and a positive electrode terminal 20, and not only seals the outer can 10, but also provides the positive electrode terminal 20. The lid plate 14 is a disc-shaped member having conductivity. The lid plate 14 and ring-shaped insulation packing 12 surrounding the lid plate 14 are disposed in the opening of the outer can 10, and the insulation packing 12 is secured to an opening edge 37 of the outer can 10 by caulking the opening edge 37 of the outer can 10. That is, the lid plate 14 and the insulation packing 12 cooperate with each other to thereby airtightly close the opening of the outer can 10.

The lid plate 14 has a central through-hole 16 at the center thereof, and a rubber valve member 18 that clogs the central through-hole 16 is disposed on the outer surface of the lid plate 14. Furthermore, a flanged cylindrical metallic positive electrode terminal 20 is electrically connected onto the outer surface of the lid plate 14 so as to cover the valve member 18. The positive electrode terminal 20 pushes the valve member 18 toward the lid plate 14. The positive electrode terminal 20 is provided with an opened degassing hole not illustrated.

The central through-hole 16 is normally closed airtightly by the valve member 18. On the other hand, if any gas is generated in the outer can 10 to increase the internal pressure, the valve member 18 is compressed by the internal pressure to open the central through-hole 16, consequently allowing such any gas to be released outward from the outer can 10 through the central through-hole 16 and a degassing hole (not illustrated) of the positive electrode terminal 20. In other words, the central through-hole 16, the valve member 18 and the positive electrode terminal 20 form a safety valve for the battery 2.

An electrode group 22 is accommodated in the outer can 10. The electrode group 22 includes belt-shaped positive electrode 24, negative electrode 26 and separator 28. Particularly, the positive electrode 24 and the negative electrode 26 are wound with the separator 28 being interposed therebetween, in a spiral manner. That is, the positive electrode 24 and the negative electrode 26 are mutually superposed with the separator 28 being interposed therebetween. The outermost periphery of the electrode group 22 is formed from one portion (outermost peripheral portion) of the negative electrode 26, and is in contact with the inner peripheral wall of the outer can 10. That is, the negative electrode 26 and the outer can 10 are electrically connected to each other.

A positive electrode lead 30 is disposed between one end of the electrode group 22 and the lid plate 14 in the outer can 10. Particularly, one end and other end of the positive electrode lead 30 are connected to the positive electrode 24 and the lid plate 14, respectively. Accordingly, the positive electrode terminal 20 and the positive electrode 24 are electrically connected to each other via the positive electrode lead 30 and the lid plate 14. A circular upper insulation member 32 is disposed between the lid plate 14 and the electrode group 22, and the positive electrode lead 30 extends through a slit 39 provided in the upper insulation member 32. A circular lower insulation member 34 is disposed also between the electrode group 22 and the bottom of the outer can 10.

Furthermore, a predetermined amount of an alkaline electrolyte solution (not illustrated) is injected in the outer can 10. The alkaline electrolyte solution, with which the electrode group 22 is impregnated, allows a charge/discharge reaction between the positive electrode 24 and the negative electrode 26 to progress. The alkaline electrolyte solution that can be here used is preferably an aqueous alkaline solution including KOH, NaOH, LiOH or the like as a solute.

The material of the separator 28, here used, can be, for example, a polyamide fiber non-woven cloth to which a hydrophilic functional group is imparted, or a polyolefin fiber non-woven cloth of polyethylene, polypropylene or the like, to which a hydrophilic functional group is imparted. Specifically, a non-woven cloth is preferably used which mainly includes a polyolefin fiber to which a sulfone group is imparted by a sulfonation treatment. The sulfone group is imparted by treating a non-woven cloth with an acid having a sulfuric acid group, such as sulfuric acid or fuming sulfuric acid. A battery using a separator including a fiber having such a sulfone group exhibits excellent characteristics of self-discharge.

The positive electrode 24 includes a conductive positive electrode core having a porous structure, and a positive electrode mixture retained in a pore in the positive electrode core. The positive electrode core described above can be, for example, foam nickel.

The positive electrode mixture includes a positive electrode active material, a conductive material and a binder. The binder serves to not only bind the positive electrode active material and the conductive material, but also bind the positive electrode mixture to the positive electrode core. The binder here used can be, for example, carboxymethyl cellulose, methyl cellulose, a PTFE (polytetrafluoroethylene) dispersion or an HPC (hydroxypropyl cellulose) dispersion.

Nickel hydroxide is used as the positive electrode active material. The form of such nickel hydroxide here used is a powder. In other words, a nickel hydroxide powder is used which is an aggregate of a nickel hydroxide particle.

An aspect is preferable in which a conductive layer is formed on the surface of the above nickel hydroxide particle. The conductive layer is preferably formed from a cobalt compound containing sodium (hereinafter, also referred to as "sodium-containing high-valent cobalt compound"). The sodium-containing high-valent cobalt compound is particularly a cobalt compound having a structure similar to that of cobalt oxyhydroxide containing sodium. The sodium-containing high-valent cobalt compound is provided with a high valence so as to have a valence of higher than three and has extremely high conductivity, and thus forms a favorable conductive network that can increase the rate of utilization of the active material in the positive electrode. Such a cobalt compound is preferable because the conductive layer is increased in stability by the action of sodium.

The above nickel hydroxide particle is preferably a high-valent nickel hydroxide particle provided with a high valence because of an enhancement in conductivity. Furthermore, the above nickel hydroxide particle is, if necessary, preferably in the form of a solid solution thereof with zinc or cobalt. Zinc suppresses swelling due to charge/discharge of the positive electrode, and prevents the electrolyte solution from being depleted. Cobalt has the effect of allowing nickel hydroxide to ensure conductivity.

The conductive material here used is a high-valent cobalt compound provided with a high valence so as to have a valence of higher than three, the high-valent cobalt compound containing sodium (hereinafter, also referred to as "sodium-containing high-valent cobalt compound"). The sodium-containing high-valent cobalt compound here refers to a cobalt compound having a structure similar to that of cobalt oxyhydroxide containing sodium. The form of the above sodium-containing high-valent cobalt compound here used is a powder. In other words, a sodium-containing high-valent cobalt compound powder is used which is an aggregate of a sodium-containing high-valent cobalt compound particle. The sodium-containing high-valent cobalt compound is excellent in conductivity, and thus contributes to an enhancement in rate of utilization of the positive electrode active material. The sodium-containing high-valent cobalt compound also exerts the effect of suppressing reduction of nickel oxyhydroxide, and thus suppresses self-discharge of the battery and contributes to an improvement in characteristics of self-discharge of the battery.

The conductive material can be, for example, produced as follows.

A cobalt hydroxide particle is convected in air containing oxygen under a high temperature environment, and is subjected to a heating treatment at a predetermined heating temperature for a predetermined heating time, with an aqueous sodium hydroxide solution being sprayed thereto. The heating treatment is kept at 80 to 100°C for 30 minutes to 2 hours. The treatment allows cobalt hydroxide to be converted into the sodium-containing high-valent cobalt compound. Thus, the conductive material is obtained.

The amount of the sodium-containing high-valent cobalt compound powder as the conductive material added to the positive electrode mixture is 0.5 parts by mass or more and 5.0 parts by mass or less based on 100 parts by mass of the above nickel hydroxide powder which is the positive electrode active material. In a case where the amount of the sodium-containing high-valent cobalt compound powder is less than 0.5 parts by mass, a sufficient effect of suppression of self-discharge cannot be obtained. On the other hand, in a case where the amount of the sodium-containing high-valent cobalt compound powder is more than 5.0 parts by mass, not only the degree of the effect of suppression of self-discharge is decreased, but also the amount of nickel hydroxide in the positive electrode is relatively decreased, thereby leading to a reduction in battery capacity. Thus, the amount of the sodium-containing high-valent cobalt compound powder is in the above numerical range.

A positive electrode additive is, if necessary, preferably added to the positive electrode active material. The positive electrode additive is added in order to improve characteristics of the positive electrode, and, for example, yttrium oxide or zinc oxide can be used.

The positive electrode active material can be, for example, produced as follows.

First, an aqueous nickel sulfate solution is prepared. An aqueous sodium hydroxide solution is gradually added to the aqueous nickel sulfate solution and is allowed to react, thereby precipitating a nickel hydroxide particle. In a case where the nickel hydroxide particle is a solid solution thereof with zinc and cobalt, nickel sulfate, zinc sulfate and cobalt sulfate are weighed so as to provide a predetermined composition, thereby preparing an aqueous mixed solution. An aqueous sodium hydroxide solution is gradually added to the resulting aqueous mixed solution with stirring of the aqueous mixed solution, and is allowed to react, thereby precipitating a nickel hydroxide particle that mainly includes nickel hydroxide and that is in the form of a solid solution thereof with zinc and cobalt. Herein, there may be adopted an aspect of a solid solution with both zinc and cobalt described above or an aspect of a solid solution with any one of zinc and cobalt.

In a case where a conductive layer is formed on the surface of the nickel hydroxide particle obtained as described above, the conductive layer is formed by, for example, the following procedure.

First, the nickel hydroxide particle obtained as described above is loaded into an aqueous ammonia solution, and an aqueous cobalt sulfate solution is added into the aqueous solution. Thus, the nickel hydroxide particle is used as a nucleus to precipitate cobalt hydroxide on the surface of the nucleus, thereby forming an intermediate particle including a cobalt hydroxide layer. The resulting intermediate particle is convected in air containing oxygen under a high temperature environment, and is subjected to a heating treatment at a predetermined heating temperature for a predetermined heating time, with an aqueous sodium hydroxide solution being sprayed thereto. The heating treatment is preferably kept at 80°C to 100°C for 30 minutes to 2 hours. The treatment allows cobalt hydroxide on the surface of the intermediate particle to be converted into a high-valent cobalt compound (cobalt oxyhydroxide or the like) having a valence of higher than three and a high conductivity and to incorporate sodium. Thus, a positive electrode active material particle is obtained which is covered with a conductive layer including a cobalt compound containing sodium (sodium-containing high-valent cobalt compound).

Next, the positive electrode 24 can be, for example, produced as follows.

First, the conductive material, the positive electrode additive (if necessary), water and a binder are added to and kneaded with a positive electrode active material powder as an aggregate of the positive electrode active material particle obtained as described above, thereby preparing a positive electrode mixture slurry. The resulting positive electrode mixture slurry is packed in, for example, foam nickel, and subjected to a drying treatment. After the drying treatment, such foam nickel in which the nickel hydroxide particle and the like are packed is rolled and then cut. Thus, a positive electrode 24 carrying the positive electrode mixture is obtained.

Next, the negative electrode 26 is described.

The negative electrode 26 has a belt-shaped conductive negative electrode substrate (core), and a negative electrode mixture is retained on the negative electrode substrate.

The negative electrode substrate is a sheet-shaped metal material with a through-hole distributed, and, for example, a punching metal sheet can be used. The negative electrode mixture not only is packed in the through-hole of the negative electrode substrate, but also is retained on both surfaces of the negative electrode substrate in a layered manner.

The negative electrode mixture includes a hydrogen storage alloy particle that can store and release hydrogen, as a negative electrode active material, and a conductive material and a binder. The binder serves to bind mutually the hydrogen storage alloy particle and the conductive material and bind the negative electrode mixture to the negative electrode substrate, at the same time. The binder here used can be, for example, a hydrophilic or hydrophobic polymer, and the conductive material here used can be carbon black or graphite. A negative electrode additive may also be, if necessary, added to the negative electrode mixture.

The hydrogen storage alloy in the hydrogen storage alloy particle is not particularly limited, and one for use in a common nickel-hydrogen secondary battery is used.

Next, the above hydrogen storage alloy particle is obtained, for example, as follows.

First, each metal raw material is weighed and mixed so that a predetermined composition is obtained, and the mixture is molten in, for example, an induction melting furnace, and then cooled to provide an ingot. The resulting ingot is subjected to a heat treatment involving retention under an inert gas atmosphere at 900 to 1200°C for 5 to 24 hours. Thereafter, the ingot cooled to room temperature is pulverized and sieved to thereby provide a hydrogen storage alloy particle having a desired particle size.

The negative electrode 26 can be, for example, produced as follows.

First, a hydrogen storage alloy powder as an aggregate of the hydrogen storage alloy particle, the conductive material, the binder and water are kneaded to thereby prepare a negative electrode mixture paste. The resulting negative electrode mixture paste is applied onto the negative electrode substrate and subjected to a drying treatment. After the drying treatment, such a negative electrode substrate to which the hydrogen storage alloy particle and the like are attached is rolled and cut. The negative electrode 26 is thus produced.

The positive electrode 24 and the negative electrode 26, produced as described above, are wound with the separator 28 being interposed therebetween, in a spiral manner, thereby forming the electrode group 22.

The electrode group 22 thus obtained is accommodated in the outer can 10. Subsequently, a predetermined amount of an alkaline electrolyte solution is injected into the outer can 10. Thereafter, the outer can 10 that accommodates the electrode group 22 and the alkaline electrolyte solution is sealed by the lid plate 14 including the positive electrode terminal 20, thereby providing the battery 2. The resulting battery 2 is subjected to an initial activation treatment and thus is made available.

### [Examples]

### 1. Production of battery

### (Example 1)

### (1) Production of negative electrode

First, a rare-earth component including 20% by mass of La and 80% by mass of Sm was prepared. The resulting rare-earth component, Mg, Ni, and Al were weighed to prepare a mixture so that the molar ratio thereof was 0.99:0.01:3.25:0.25. The resulting mixture was molten in an induction melting furnace, and a molten product was poured into a mold and thereafter cooled to room temperature, thereby providing an ingot of a hydrogen storage alloy. A sample was collected from the ingot, and subjected to compositional analysis according to an inductivity coupled plasma optical emission spectrometric method (ICP). As a result, the composition of the hydrogen storage alloy was (La_{0.20}Sm_{0.80})_{0.99}Mg_{0.01}Ni_{3.25}Al_{0.25}.

Next, the ingot was subjected to a heat treatment involving retention under an argon gas atmosphere at a temperature of 1000°C for 10 hours. After the heat treatment, the ingot of the hydrogen storage alloy cooled to room temperature was mechanically pulverized in an argon gas atmosphere, thereby obtaining a hydrogen storage alloy powder as an aggregate of a hydrogen storage alloy particle. The resulting hydrogen storage alloy powder was subjected to measurement of the size of the particle with a laser diffraction/scattering particle size distribution measurement apparatus, and as a result, the volume average particle size (MV) of the hydrogen storage alloy particle was 60 µm.

To 100 parts by mass of the resulting hydrogen storage alloy powder were added 0.4 parts by mass of sodium polyacrylate, 0.1 parts by mass of carboxymethyl cellulose, 1.0 part by mass of a styrene-butadiene rubber (SBR) dispersion, 1.0 part by mass of carbon black and 30 parts by mass of water, and the resultant was kneaded, thereby preparing a negative electrode mixture paste.

The negative electrode mixture paste was homogeneously applied onto both surfaces of an iron perforated plate as a negative electrode substrate so that the thickness was constant. The perforated plate had a thickness of 60 µm, and the surface thereof was plated with nickel.

After the paste was dried, such a perforated plate to which the hydrogen storage alloy powder and the like were attached was further rolled and thus increased in amount of the alloy per volume, and thereafter cut, thereby obtaining a negative electrode 26 for AA size use.

### (2) Production of positive electrode

Nickel sulfate, zinc sulfate and cobalt sulfate were weighed so that the rate of zinc was 3% by mass and the rate of cobalt was 1% by mass relative to nickel, and were added to an aqueous 1 N sodium hydroxide solution including an ammonium ion, thereby preparing an aqueous mixed solution. With the resulting aqueous mixed solution being stirred, an aqueous 10 N sodium hydroxide solution was gradually added to the aqueous mixed solution to perform a reaction and the pH in the reaction was stabilized at 13 to 14, and thus a base particle mainly including nickel hydroxide was produced in the form of a solid solution with zinc and cobalt.

After the resulting base particle was washed with pure water in an amount of 10-fold, three times, the base particle was dehydrated and dried. The resulting base particle had a spherical shape having an average particle size of 10 µm.

Next, the resulting base particle was loaded into an aqueous ammonia solution, and an aqueous cobalt sulfate solution was added thereto with the pH in the reaction being kept at 9 to 10. Thus, the base particle was used as a nucleus to precipitate cobalt hydroxide on the surface of the nucleus, thereby obtaining an intermediate particle including a cobalt hydroxide layer having a thickness of about 0.1 µm. Next, the intermediate particle was convected in high-temperature air containing oxygen under an environment at 80°C, an aqueous 12 N sodium hydroxide solution was sprayed thereto, and the resultant was subjected to a heating treatment for 45 minutes. Thus, not only cobalt hydroxide on the surface of the intermediate particle was converted into cobalt oxyhydroxide having a valence of higher than three and a high conductivity, but also sodium was incorporated into a cobalt oxyhydroxide layer, and thus a conductive layer including a cobalt compound containing sodium was formed. Thereafter, a particle including such a cobalt oxyhydroxide layer was collected by filtration, and washed with water and then dried at 60°C. Thus, a positive electrode active material powder was obtained which was an aggregate of a positive electrode active material particle having a conductive layer formed from cobalt oxyhydroxide containing sodium, on the surface of the base particle.

Next, a conductive material was prepared. The method for producing the conductive material is shown below.

First, cobalt hydroxide having an average particle size of 10 µm was convected in high-temperature air containing oxygen under an environment at 80°C, an aqueous 12 N sodium hydroxide solution was sprayed, and a heating treatment for 60 minutes was performed. The treatment allowed cobalt hydroxide to be converted into a highly conductive sodium-containing high-valent cobalt compound (cobalt oxyhydroxide containing sodium and a cobalt compound having a structure similar thereto). Thus, the conductive material was obtained.

Next, 0.5 parts by mass of a powder of the sodium-containing high-valent cobalt compound, 0.2 parts by mass of HPC, 0.5 parts by mass of a dispersion solution of PTFE (binder), 1.0 part by mass of Y₂O₃ (additive), 1.0 part by mass of ZnO (additive) and 30 parts by mass of water were mixed with 100 parts by mass of the positive electrode active material powder produced as described above, thereby preparing a positive electrode active material paste, and the positive electrode active material paste was applied onto and packed in a foam nickel sheet as a positive electrode core. The foam nickel sheet including the positive electrode active material was dried, and thereafter rolled and cut, thereby obtaining a positive electrode 24 for AA size use.

### (3) Assembling of nickel-hydrogen secondary battery

The resulting positive electrode 24 and negative electrode 26 were wound with a separator 28 being interposed therebetween in a spiral manner, thereby producing an electrode group 22. The separator 28 here used in production of the electrode group 22 was formed from a polypropylene fiber non-woven cloth subjected to a sulfonation treatment, and the thickness thereof was 0.1 mm (weight per area: 53 g/m²).

On the other hand, an aqueous solution including KOH, NaOH and LiOH was prepared as an alkaline electrolyte solution. The alkaline electrolyte solution included KOH, NaOH and LiOH at a ratio of KOH:NaOH:LiOH = 0.8:7.0:0.02.

Next, the electrode group 22 was accommodated in an outer can 10 having a bottomed cylindrical shape, and a predetermined amount of the alkaline electrolyte solution prepared was injected. Thereafter, the opening of an outer can 10 was closed by a sealing member 11, and an AA-sized nickel-hydrogen secondary battery 2 having a nominal capacity of 2000 mAh was assembled. The nominal capacity was here a discharge capacity of the battery charged at 0.2 It for 16 hours and thereafter discharged at 0.4 It until the battery voltage reached 1.0 V, under an environment at a temperature of 25°C.

### (4) Initial activation treatment

The battery 2 was subjected to an initial activation treatment by repeating a charge/discharge operation five times, the operation including charge at 0.2 It for 16 hours and thereafter discharge at 0.4 It until the battery voltage reached 1.0 V, under an environment at a temperature of 25°C. Thus, the battery 2 was made available.

### (Example 2)

A nickel-hydrogen secondary battery was assembled in the same manner as in Example 1 except that the amount of the sodium-containing high-valent cobalt compound powder added was 1.0 part by mass.

### (Example 3)

A nickel-hydrogen secondary battery was assembled in the same manner as in Example 1 except that the amount of the sodium-containing high-valent cobalt compound powder added was 1.5 parts by mass.

### (Example 4)

A nickel-hydrogen secondary battery was assembled in the same manner as in Example 1 except that the amount of the sodium-containing high-valent cobalt compound powder added was 3.0 parts by mass.

### (Example 5)

A nickel-hydrogen secondary battery was assembled in the same manner as in Example 1 except that the amount of the sodium-containing high-valent cobalt compound powder added was 5.0 parts by mass.

### (Comparative Example 1)

A nickel-hydrogen secondary battery was assembled in the same manner as in Example 1 except that no conductive material was added.

### (Comparative Example 2)

A nickel-hydrogen secondary battery was assembled in the same manner as in Example 1 except that the amount of the sodium-containing high-valent cobalt compound powder added was 8.0 parts by mass.

### (Comparative Example 3)

A nickel-hydrogen secondary battery was assembled in the same manner as in Example 1 except that a cobalt hydroxide powder was adopted as the conductive material instead of the sodium-containing high-valent cobalt compound powder and the amount thereof added was 1.0 part by mass.

### 2. Evaluation of nickel-hydrogen secondary battery (1) Characteristics of self-discharge

The discharge capacity of each of the batteries of Examples 1 to 5 and Comparative Examples 1 to 3, subjected to the initial activation treatment, was measured by charging such each battery at a charge current of 1.0 It for 1 hour under an environment at 25°C and thereafter discharging such each battery at a discharge current of 0.2 It under an environment at 25°C until the discharge cutoff voltage reached 0.8 V. The discharge capacity was here the initial discharge capacity.

Next, each of the batteries of Examples 1 to 5 and Comparative Examples 1 to 3 was charged at a charge current of 1.0 It for 1 hour under an environment at 25°C, and thereafter left to still stand under an environment at 40°C for 2 weeks. Next, such each battery was placed under an environment at 25°C, and the discharge capacity of such each battery was measured in discharge at a discharge current of 0.2 It until the discharge cutoff voltage reached 0.8 V, at a battery temperature of 25°C. The discharge capacity here was defined as the remaining capacity after leaving to stand at 40°C.

Furthermore, each of the batteries of Examples 1 to 5 and Comparative Examples 1 to 3 was charged at a charge current of 1.0 It for 1 hour under an environment at 25°C, and thereafter left to still stand under an environment at 80°C for 2 weeks. Such each battery was placed under an environment at 25°C, and the discharge capacity of such each battery was measured in discharge at a discharge current of 0.2 It until the discharge cutoff voltage reached 0.8 V, at a battery temperature of 25°C. The discharge capacity here was defined as the remaining capacity after leaving to stand at 80°C.

Not only the ratio of the remaining capacity after leaving to stand at 40°C to the initial discharge capacity (the remaining capacity ratio at 40°C) was determined, but also the ratio of the remaining capacity after leaving to stand at 80°C to the initial discharge capacity (the remaining capacity ratio at 80°C) was determined. The respective values of the remaining capacity ratio at 40°C and the remaining capacity ratio at 80°C, of the battery of Comparative Example 1, were assumed to be 100, the ratio of the value of the remaining capacity ratio at 40°C and the ratio of the value of the remaining capacity ratio at 80°C, of each of the batteries, relative to the above respective ratios, were determined, and the results were represented together in the columns of characteristics of self-discharge at 40°C and characteristics of self-discharge at 80°C in Table 1. It was indicated that any battery where such values of characteristics of self-discharge at 40°C and characteristics of self-discharge at 80°C were higher was more suppressed in self-discharge and was more excellent in characteristics of self-discharge.

### [Table 1]

**[Table 1]**

| | Conductive material | | Characteristics of self-discharge | |
|---|---|---|---|---|
| | Type | Amount added [part(s) by mass] | Characteristics of self-discharge at 40°C | Characteristics of self-discharge at 80°C |
| Example 1 | Sodium-containing high-valent cobalt compound | 0. 5 | 1 0 1. 6 | 129.0 |
| Example 2 | Sodium-containing high-valent cobalt compound | 1. 0 | 104. 7 | 134.2 |
| Example 3 | Sodium-containing high-valent cobalt compound | 1.5 | 105. 7 | 130. 3 |
| Example 4 | Sodium-containing high-valent cobalt compound | 3. 0 | 103. 8 | 128.4 |
| Example 5 | Sodium-containing high-valent cobalt compound | 5. 0 | 103.4 | 127.7 |
| Comparative Example 1 | Not added | 0 | 100. 0 | 100. 0 |
| Comparative Example 2 | Sodium-containing high-valent cobalt compound | 8. 0 | 101.6 | 119.4 |
| Comparative Example 3 | Cobalt hydroxide | 1. 0 | 99. 5 | 98. 1 |

### (2) Discussion

The battery of Comparative Example 3 (corresponding to a conventional example), to which cobalt hydroxide was added as the conductive material, exhibited a value of characteristics of self-discharge at 40°C, of 99.5, and a value of characteristics of self-discharge at 80°C, of 98.1. Cobalt hydroxide, while was considered to serve as the conductive material to form a conductive network in the positive electrode, was found to be less effective for suppression of self-discharge.

On the other hand, each of the batteries of Examples 1 to 5 and Comparative Example 2, to which the sodium-containing high-valent cobalt compound was added as the conductive material, exhibited a value of characteristics of self-discharge at 40°C and a value of characteristics of self-discharge at 80°C, of more than 100, and was found to be suppressed in self-discharge and improved in characteristics of self-discharge, as compared with the battery of Comparative Example 1, to which no conductive material was added, and the battery of Comparative Example 3, where cobalt hydroxide was adopted as the conductive material. It was considered that a case where the sodium-containing high-valent cobalt compound was used as the conductive material was different in the state of cobalt after charge/discharge of such each battery, from a case where cobalt hydroxide was used. It was considered that the difference in the state of cobalt allowed reduction of nickel oxyhydroxide to be suppressed, resulting in suppression of self-discharge and an enhancement in characteristics of self-discharge.

It was found from Example 5 and Comparative Example 2 that the effect of enhancing characteristics of self-discharge tended to be gradually decreased when the amount of the sodium-containing high-valent cobalt compound added exceeded 5.0 parts by mass and reached 8.0 parts by mass. If the amount of the sodium-containing high-valent cobalt compound added exceeded 5.0 parts by mass, the amount of nickel hydroxide as the positive electrode active material in the positive electrode mixture was relatively small, probably leading to a reduction in battery capacity. Accordingly, it was considered that the amount of the sodium-containing high-valent cobalt compound added was required to be 5.0 parts by mass or less.

From the foregoing, the sodium-containing high-valent cobalt compound by itself is excellent in conductivity and thus allows a favorable conductive network to be formed in the positive electrode, and therefore contributes to an enhancement in rate of utilization of the positive electrode active material. The sodium-containing high-valent cobalt compound also exerts the effect of suppressing self-discharge. Accordingly, an alkaline secondary battery including a positive electrode including the sodium-containing high-valent cobalt compound as a conductive material can be said to achieve both an enhancement in rate of utilization of the positive electrode active material and suppression of self-discharge.

The present invention is not limited to the above embodiments and Examples, and can be variously modified. A battery to which the present invention is applied may be an alkaline secondary battery, and examples thereof can include, in addition to a nickel-hydrogen secondary battery, a nickel-cadmium secondary battery and a nickel-zinc secondary battery. The battery structure is not especially limited, and may have any shape such as a cylindrical shape or a square shape.

## Claims

1. A positive electrode (24) for an alkaline secondary battery, comprising a positive electrode core and a positive electrode mixture packed in the positive electrode core,
**characterized in that**
the positive electrode mixture comprises a nickel hydroxide powder that is an aggregate of a particle of nickel hydroxide as a positive electrode active material, and a conductive material,
the conductive material is a high-valent cobalt compound provided with a high valence and having a valence of more than three, the high-valent cobalt compound containing sodium, and
the conductive material is in an amount of 0.5 parts by mass or more and 5.0 parts by mass or less based on 100 parts by mass of the positive electrode active material.

2. The positive electrode (24) for an alkaline secondary battery according to claim 1,
**characterized in that**
the particle of nickel hydroxide has a conductive layer formed by the sodium-containing high-valent cobalt compound, on a surface thereof.

3. An alkaline secondary battery (2) comprising a container, and an electrode group (22) that is accommodated in the container together with an alkaline electrolyte solution,
**characterized in that**
the electrode group comprises a positive electrode (24) and a negative electrode (26) superposed with a separator being interposed therebetween, and
the positive electrode (24) is the positive electrode for an alkaline secondary battery according to claim 1 or 2.

4. The alkaline secondary battery (2) according to claim 3,
**characterized in that**
the negative electrode (26) comprises a hydrogen storage alloy.
